# EUROPÄISCHE PATENTANMELDUNG

(11) **EP 4 803 407 A1**
(43) Veröffentlichungstag der Anmeldung: **09.09.2026**
(21) Anmeldenummer: 26162656.8
(22) Anmeldetag: 05.03.2026
(51) Int. Cl.: B62D 25/08, B29C 45/17, B62D 29/04

(54) **FRONTENDTRÄGER**

(30) Priorität: 07.03.2025 DE 202025101232 U; 25.02.2026 DE 202026101045 U
(71) Anmelder: Weber Fibertech GmbH, 88677 Markdorf (DE)
(72) Erfinder: AHMAD, Bilal, 88090 Immenstaad (DE); SCHMITT, Friedbert, 88677 Markdorf (DE); CHIRAYIL, Abhilash Dominic, 88048 Friedrichshafen (DE); SONNENSTÄDT, Björn, 88677 Markdorf (DE)
(74) Vertreter: RDL Patentanwälte PartG mbB

(57) **Zusammenfassung**

Frontendträger, der mittels einer Fluidinjektionstechnik hergestellt ist und in mindestens einem Abschnitt einen Hohlraum (16, 42, 306, 410, 430) umfasst, wobei der mindestens eine Abschnitt im Querschnitt mindestens zwei Stege (25, 27, 45, 46, 406, 408, 426, 428) umfasst.

## Beschreibung

Die Erfindung betrifft einen Frontendträger für ein Fahrzeug, insbesondere für ein Kraftfahrzeug und ein Verfahren zum Herstellen eines Frontendträgers.

Frontendträger (engl.: front-end carrier) sind strukturelle Bauteile, die für einen Einsatz vorne an einem Fahrzeug, d. h. an der Fahrzeugfront, eingerichtet und vorgesehen sind. An solchen Frontendträgern werden unterschiedliche Elemente, wie bspw. Scheinwerfer, Kühler und Motorhauben-Schlösser, angebracht bzw. montiert. Dabei hält die Karosserie des Fahrzeugs die Position des Frontendträgers durch mechanische Befestigungselemente fest.

Zu berücksichtigen ist, dass Frontendträger bestimmte mechanische Eigenschaften hinsichtlich Steifigkeit und Festigkeit aufweisen sollen. Weiterhin müssen Frontendträger aufgrund der Beschaffenheit und des Einsatzes in der Nähe des Kühlers des Fahrzeugs unempfindlich gegenüber äußeren Bedingungen und zudem witterungsbeständig sein.

Bekannte Frontendträger werden aus Metall- und Polymermaterialien hergestellt. Unter den Polymermaterialien sind die gängigsten Materialien unverstärkte oder verstärkte Thermoplaste, wie bspw. glasfaserverstärktes Polypropylen. Die am häufigsten verwendeten Verfahren zur Herstellung von Frontendträgern sind Spritzguss und Fließpressen.

Das Spritzgussverfahren ermöglicht die kostengünstigste Integration von Funktionen, wie bspw. Versteifungsstrukturen (engl.: stiffening structure) und Befestigungspunkten (engl.: mounting points). Versteifungsstrukturen wie Rippen verstärken den Zielbereich. Befestigungspunkte werden verwendet, um den Frontendträger an der Karosserie zu befestigen oder Elemente, wie bspw. Kühler, Scheinwerfer, Motorhauben-Schluss, Hupe, Sensoren usw., am Frontendträger zu montieren.

Vor diesem Hintergrund werden ein Frontendträger mit den Merkmalen des Anspruchs 1 sowie ein Verfahren nach Anspruch 15 vorgestellt. Ausführungsformen ergeben sich aus den abhängigen Ansprüchen und aus der Beschreibung.

Der vorgestellte Frontendträger ist mittels Fluidinjektionstechnik hergestellt und umfasst in mindestens einem Abschnitt einen Hohlraum bzw. mindestens ein Hohlprofil. Dieser Hohlraum kann auch als Hohlkanal bezeichnet werden. Bei der Herstellung kann bspw. eine Wasserinjektionstechnik, eine Gasinjektionstechnik oder eine Projektilinjektionstechnik zum Einsatz kommen. Weiterhin ist vorgesehen, dass der mindestens eine Abschnitt im Querschnitt mindestens zwei Stege umfasst.

Weiterhin kann der Abschnitt im Querschnitt einen Flansch, zwei Flansche oder mehr Flansche ausfweisen.

In einer Ausführungsform weist der Abschnitt im Querschnitt zwei Stege und zwei Flansche auf.

Weiterhin kann der Abschnitt den Querschnitt eines Trägers aufweisen, der ausgewählt ist aus einer Gruppe, die besteht aus: I-Träger, T-Träger, Doppel-T-Träger, C-Träger, asymmetrischer Träger.

In einer Ausfühjrungsform ist vorgesehen, dass durch die angewendete Fluidinjektionstechnik in dem Frontendträger mindestens ein Hohlraum ausgebildet wird, der sich dadurch auszeichnet, dass der Querschnitt des Frontendträgers in diesem mindestens einen Abschnitt wie der Querschnitt bzw. das Profil eines I-Trägers bzw. eines Doppel-T-Trägers aussieht.

Fluidinjektionstechnik (FIT) ist ein Überbegriff für Verfahren, bei denen durch die Injektion eines Fluids Hohlräume erzeugt werden. Die Fluidinjektionstechnik kann dabei mit einem Spritzgießen, einem Fließpressverfahren oder irgendeinem anderen geeigneten Verfahren kombiniert werden. FIT wird dabei insbesondere in Verbindung mit Polymer-Materialien, insbesondere mit Kunststoffen, eingesetzt. Zusätzlich zu den üblichen Konstruktionsmerkmalen von Kunststoffteilen kann diese Technik bzw. dieser Prozess dazu verwendet werden, um Hohlprofile in den Komponenten herzustellen, wobei dies mit geringen Kosten möglich ist. Aufgrund der hohlen Geometrie der Bauteile haben FIT-Komponenten eine höhere Steifigkeit, während diese gleichzeitig leicht und kosteneffizient herzustellen sind.

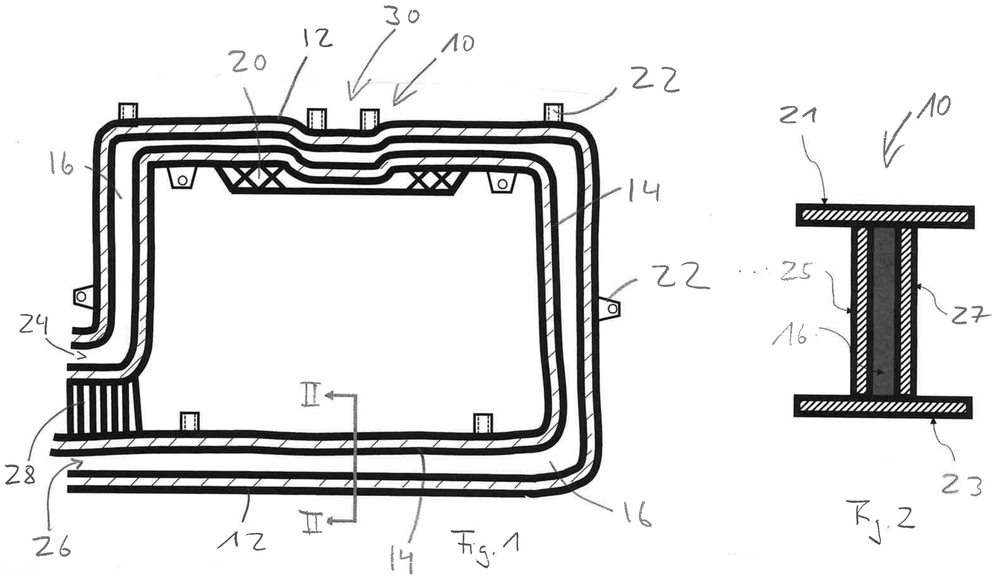

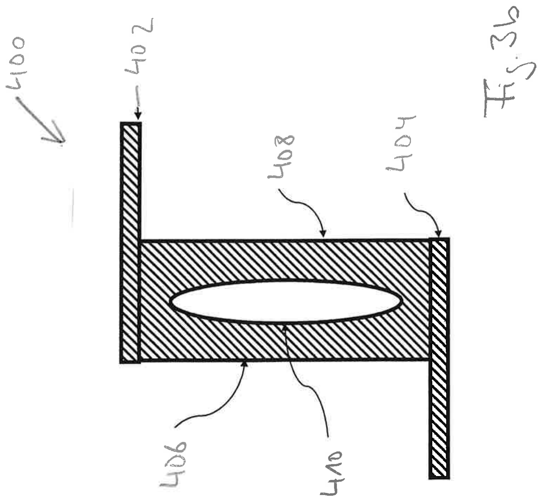

Der mindestens eine Abschnitt kann im Querschnitt zwei Flansche und zwei Stege umfassen. Es wird hierzu auf Figur 2 verwiesen. Dabei liegen sich die beiden Flansche und die beiden Stege jeweils gegenüber, so dass ein im Querschnitt geschlossener Hohlraum entsteht. Der Querschnitt kann auch asymmetrische sein, siehe Figur 3b.

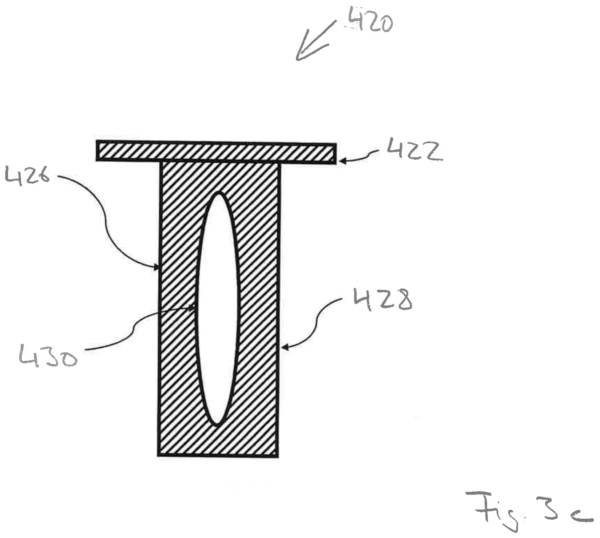

Zu beachten ist, dass zumindest abschnittsweise die Anzahl der Flansche und die Anzahl der Stege von zwei auf einen reduziert werden kann. In diesem Fall wird in diesem Bereich kein Hohlraum mehr erzeugt. Die Geometrie entspricht dann einem I-Träger oder T-Träger. Durch das Entfernen nur eines Flansches bleiben jedoch zwei Stege übrig und der Hohlraum bzw. der Hohlkanal kann weiterhin hergestellt werden. Dadurch ist es vergleichbar mit einem T-Träger mit zwei Stegen. Es wird hierzu auf Figur 3c verwiesen.

Weiterhin ist zu berücksichtigen, dass ein Frontendträger mit dem mindestens einen Abschnitt mit Hohlraum und I-Träger- bzw. Doppel-T-Träger-Profil für die Gewichtsreduzierung und die mechanische Festigkeit verantwortlich sind.

Der Hohlraum kann in mindestens einem Abschnitt und somit auch in mehr als einem Abschnitt vorgesehen sein. Grundsätzlich ist es auch möglich, dass über die gesamte Länge des Frontendträgers, typischerweise bis kurz vor den beiden Enden des Frontendträgers ein durchgängiger Hohlraum ausgebildet ist.

Die Form des Querschnitts des Hohlraums kann unterschiedliche Ausgestaltungen annehmen. So kann der Hohlraum im Querschnitt zumindest abschnittsweise kreisförmig, rechteckig, elliptisch oder unregelmäßig sein.

Weiterhin kann der Frontendträger mindestens einen Wassereintritt und mindestens einen Wasseraustritt aufweisen In einem Bereich zwischen dem mindestens einen Wassereintritt und dem mindestens einen Wasseraustritt kann dann eine Verbindungsstruktur vorgesehen sein.

Außerdem kann bzw. können der mindestens eine Wassereintritt und/oder der mindestens eine Wasseraustritt im Bereich eines Befestigungspunktes bzw. Montagepunktes angeordnet sein.

Es kann zudem an dem Frontendträger ein zusätzlicher Befestigungspunkt angeordnet sein.

Weiterhin ist eine Verstärkung mittels Endlosfasern möglich. Verbundstrukturen mit Endlosfasern sind Materialien, bei denen Verstärkungen mit Endlosfasern mit einem Matrixwerkstoff kombiniert werden. Die Größen bzw. Eigenschaften werden kombiniert, was zu einem Werkstoff mit hoher Steifigkeit und Festigkeit entlang der Erstreckungsrichtung der Fasern führt.

Es sind Prozesse bekannt, bei denen ein Hybridformen durchgeführt wird, wobei ein Formen eines Organoblechs und ein Spritzgießen zusammen in der Spritzgießform stattfinden. Durch eine solche funktionale Integration und hinzugefügte Rippenstrukturen wird eine höhere Strukturfestigkeit erreicht.

Die aus dem Stand der Technik bekannten Verfahren und Prozesse sind mit einigen Nachteilen verbunden. So kann das FIT-Verfahren nur dazu verwendet werden, Kunststoffe bzw. Polymere mit oder ohne Partikel, Kurz- oder Langfaserverstärkung zu verarbeiten, nicht aber mit Endlosfaserverstärkung. Diese Werkstoffe haben eine geringere Steifigkeit und Festigkeit im Vergleich zu Verbundstoffen mit Endlosfasern, wenn die Bestandteile, d. h. die Verstärkung und die Matrix, dieselben sind. Obgleich das Hohlprofil die Bauteilsteifigkeit vielfach erhöht, erfährt unter der Einwirkung von mechanischen Lasten die äußerste Schicht des Werkstoffs die höchste Belastung. An dieser Stelle liegt der Schwachpunkt des Materials selbst. Im FIT-Verfahren können unverstärkte, kurzfaserverstärkte, d. h. bis 3 mm Faserlänge, oder langfaserverstärkte, d. h. ab 3 mm Faserlänge, eingesetzt werden. Eine Kombination mit Endlosfasern erfolgt bisher nicht.

Bei üblichen Hybridform-Verfahren, bei denen Verbundstoffe mit Endlosfasern, wie bspw. Organobleche, mit unverstärkten Polymeren oder Polymere mit kurzen und/oder langen Fasern kombiniert werden, kann ein Hohlprofil nicht in einem einzigen Schritt hergestellt werden. Beispiele umfassen ein Spritzgießen oder einen Formpressprozess, bei dem zusätzlich zu dem Formen von Endlosfasern strukturelle Verstärkungen, wie bspw. Rippen, Wulste usw., hinzugefügt werden, um das Leistungsvermögen der Bauteile zu steigern. Daher besteht der Schwachpunkt von Verstärkungen mit Endlosfasern in den geometrischen Eigenschaften bzw. Merkmalen, die bei tragbaren Kosten unter Verwendung dieser Materialien hergestellt werden.

Die Fluidinjektionstechnik erzeugt somit Hohlstrukturen. Dabei sind alle funktionellen Integrationsmerkmale traditioneller Formverfahren, wie bspw. Versteifungsstruktur und Befestigungspunkt, mit dieser Technik ebenfalls möglich.

Der vorgestellte Frontendträger ist bspw. für einen Einbau bzw. Einsatz in einem Kraftfahrzeug vorgesehen. In Ausgestaltung ist der Hohlraum zumindest abschnittsweise kreisförmig, elliptisch und/oder unregelmäßig.

Weiterhin kann der Frontendträger, wie bereits ausgeführt wurde, zumindest abschnittsweise durch eine Endlosfaser verstärkt sein. Dann kann der Frontendträger mindestens einen ersten Abschnitt aufweisen, in dem ein Hohlraum oder Hohlprofil vorgesehen ist, und mindestens einen zweiten Abschnitt, der mit Endlosfasern verstärkt ist.

Der Frontendträger kann derart aufgebaut sein, dass wenigstens ein erster Abschnitt und wenigstens ein zweiter Abschnitt so zueinander angeordnet sind, dass der wenigstens eine erste Abschnitt zumindest abschnittsweise von dem wenigstens einen zweiten Abschnitt umgeben ist. Dabei kann der Abschnitt sich in Längsrichtung erstrecken oder es kann sich um einen Radial/QuerschnittAbschnitt handeln.

Der Frontendträger kann bspw. als Hohlkörper ausgebildet sein, der einen inneren ausgeschnittenen Hohlraum und eine Wandung umfasst, wobei der ausgeschnittene Hohlraum das Hohlprofil definiert und die Wandung den zweiten Abschnitt mit den Endlosfasern aufweist.

Die Endlosfasern können bspw. in einem Bereich außen an der Wandung parallel und/oder diagonal zu einer Längsachse des Hohlprofils verlaufen.

Bei dem vorgestellten Frontendträger kann ein thermoplastischer oder duroplastischer Kunststoff mit oder ohne Verstärkung verwendet werden.

Weiterhin können Endlosfasern mit oder ohne Matrixmaterial verwendet werden. Die Endlosfasern können in dem Fluidinjektionsschritt oder nach diesem Schritt eingebunden werden.

In Ausgestaltung wird somit eine Verstärkung von Polymer- bzw. Kunststoffbauteilen mit Hohlprofil bzw. Hohlquerschnitt mit Endlosfasern vorgestellt. Der dabei verwendete Herstellungsprozess und daher die Gestaltung der herzustellenden Bauteile, wobei das genannte Verfahren verwendet wird, werden als E-FIT bezeichnet, wobei dies ein Akronym für die Bezeichnung Endless fiber composite (Endlosfaser-Verbundwerkstoff) und Fluid Injection Technology (Fluidinjektionstechnik) darstellt.

Frontendträger, die mit diesem E-FIT-Verfahren hergestellt werden, haben vorteilhaft sowohl aufgrund des verwendeten Verbundwerkstoffs mit Endlosfasern als auch aufgrund der geometrischen Merkmale der FIT-Bauteile ein höheres mechanisches Leistungsvermögen. Aus diesem Grunde haben E-FIT-Bauteile bzw. FIT-Komponenten eine äußerst hohe spezifische Steifigkeit und Festigkeit, was zu Gestaltungen mit geringem Gewicht bei niedrigen Kosten führt. Solche E-FIT-Bauteile können im Bereich von Automobilen, der Luftfahrt und bei Elektrofahrrädern Anwendung finden, sind aber nicht auf diese Bereiche beschränkt, sondern können vielfältig eingesetzt werden.

In einem E-FIT-Verfahren kann bspw. ein Organoblech zwischen zwei Abschnitten platziert werden. In einer Bilddarstellung aus zwei verschiedenen Perspektiven sieht dies dann unterschiedlich aus.

Es zeigt sich, dass es bei vielen Anwendungen möglich ist, durch die Kombination von Verbundstoffen, die Endlosfasern aufweisen, mit Hohlkanälen eine angestrebte Gestaltung bei geringem Gewicht zu erreichen.

Die auf diese Weise hergestellten Bauteile weisen ein höheres mechanisches Leistungsvermögen, insbesondere hinsichtlich Steifigkeit und Festigkeit, aufgrund der geometrischen Merkmale der Hohlprofile auf. Verstärkungen mit Endlosfasern weisen aufgrund des Materials bzw. des Werkstoffs selbst ein höheres mechanisches Leistungsvermögen auf.

Es werden auf diese Weise die Aspekte Bauteile mit Hohlprofil mit Verstärkungen aus Endlosfasern miteinander verbunden. Somit wird bei den Bauteilen bzw. Komponenten eine maximale Steifigkeit sowie eine hohe Festigkeit erzielt. Die Verbindung der beiden Aspekte kann in mehr als einem Schritt erfolgen.

Alle Polymere bzw. Kunststoffe, die in einem herkömmlichen Kunststoffherstellungsprozess, wie bspw. ein Spritzgießen, ein Formpressen, hergestellt werden, können für E-FIT verwendet werden, einschließlich thermoplastischer Kunststoffe und duroplastischer Kunststoffe, mit oder ohne Verstärkung. Zur Verstärkung können Kurzfasern oder Langfasern verwendet werden.

Endlosfasern können Fasern mit oder ohne Matrixmaterial sein. Weiterhin können Fasern unidirektional, geschichtet (layup) oder mehrlagig in der gestalteten Orientierung sein, als Laminat, gewebt oder geflochten usw. sein.

Es können alle möglichen Werkstoffe für Endlosfasern verwendet werden, einschließlich Glas, Kohlenstoff, synthetische Aramidfaser, Naturfaser, Basaltfasern usw.

Die Verstärkung mittels Endlosfasern durch Glasfaserroving, UD-Tapes und/oder Organoblechen realisiert sein. Unidirektionale Tapes (UD-Tapes) sind endlosfaserverstärkte Bänder unterschiedlicher Breite mit unidirektional ausgerichteten Verstärkungsfasern. Glasfaserroving ist ein schweres Glasfasergewebe mit einem erhöhten Faseranteil, der aus seinen Endlosfilamenten gewonnen wird. Organobleche sind leistungsfähige, endlosfaserverstärkte Verbundwerkstoffe aus Kohlenstoff- oder Glasfasergewebe. Die Verstärkung kann grundsätzlich durch Glasfaser/Kohlefaser erfolgen.

Das Verfahren zur Herstellung des vorgestellten Frontendträgers zeichnet sich durch einen Fluidinjektionsschritt aus, wodurch der hergestellte Frontendträger einen Hohlraum umfasst. In Ausgestaltung ist dann ein Hohlprofil vorgesehen.

Das Verfahren zur Herstellung des Frontendträgers hat, zumindest in einigen Varianten, eine Reihe von Vorteilen:
Erhöhung der Steifigkeit,
Erhöhung des Festigkeitsziels,
Gewichtsreduzierung der Struktur,
Funktionsintegration,
Kostenreduzierung,
vollautomatische Produktion in sehr geringen Zykluszeiten,
kann vollständig recycelt werden,
technologieoffene Entwicklung.

Durch die hierin vorgestellten Maßnahmen wird die spezifische Festigkeit und Steifigkeit des Frontendträgers verbessert und es können Gewicht und Kosten eingespart werden. Es wurde erkannt, dass dies insbesondere dadurch erreicht wird, dass der vorgestellte Frontendträger eine geschlossene Hohlquerschnittsstruktur aufweist. Derartige Strukturen können mit herkömmlichen Formverfahren nicht in einem einzigen Schritt hergestellt werden.

Bei dem Verfahren zur Herstellung können die Endlosfasern in dem Fluidinjektionsschritt oder in einem Schritt nach dem Fluidinjektionsschritt eingebunden werden.

Zudem ist zu berücksichtigen, dass die Herstellung des Frontendträgers durch Zusammenfügen zweier separat hergestellter Halbschalen zu einem Hohlprofil die Kosten und das Gewicht erhöhen können.

Von Bedeutung ist, dass der vorgestellte Frontendträger mit hohlem Querschnitt bzw. Hohlstruktur in einem Prozessschritt hergestellt werden kann, wobei die Fluidinjektionstechnik (eng.: Fluid Injection Technology) eingesetzt wird.

Weiterhin kann bei dem Frontendträger ein thermoplastischer oder duroplastischer Werksto mit oder ohne Verstärkung verwendet werden.

Bei dem vorgestellten Verfahren wird eine Fluidinektionstechnik eingesetzt, um einen Frontendträger herzustellen.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Weitere Vorteile und Ausgestaltungen der Erfindung ergeben sich aus der Beschreibung und der beiliegenden Zeichnung.

### Kurze Beschreibung der Zeichnung

Figur 1 zeigt in einer Schnittdarstellung eine Ausführungsform des vorgestellten Frontendträgers.
Figur 2 zeigt einen Schnitt entlang der Linie II-II in Figur 1 zur Verdeutlichung des Querschnitts des Hohlraums mit I-Profil.
Figur 3 zeigt Querschnitte weiterer Ausführungen des Hohlraums im Frontendträger und einen Querschnitt durch den Frontendträger in einem Bereich ohne Hohlraum.
Figur 4 zeigt in drei Darstellungen unterschiedliche Phasen des hierin beschriebenen Herstellungsverfahrens.
Figur 5 zeigt in einem Flussdiagramm einen möglichen Ablauf des vorgestellten Verfahrens zum Herstellen einer Ausführungsform des Frontendträgers.
Figur 6 zeigt in einem weiteren Flussdiagramm einen weiteren möglichen Ablauf des vorgestellten Verfahrens zum Herstellen einer weiteren Ausführungsform des Frontendträgers.
Figur 7 zeigt einen Querschnitt durch einen Frontendträger.

### Ausführungsformen der Erfindung

Die Erfindung ist anhand von Ausführungsformen in der Zeichnung schematisch dargestellt und wird nachfolgend unter Bezugnahme auf die Zeichnung ausführlich beschrieben.

Figur 1 zeigt eine Ausführungsform eines Frontendträgers, der insgesamt mit der Bezugsziffer 10 bezeichnet ist. Dieser Frontendträger 10 ist mittels Fluidinjektionstechnik hergestellt, so dass dieser zwei Wände 12, 14 umfasst, zwischen denen ein Hohlraum 16, der hierin auch als Hohlprofil bezeichnet wird, ausgebildet ist. Anders ausgedrückt weist der Frontendträger 10 eine Hohlstruktur auf.

Weiterhin zeigt die Darstellung eine Versteifungsstruktur 20 und Befestigungspunkte 22. Zwischen einem Wassereintritt 24 und einem Wasseraustritt 26 befindet sich eine Verbindungsstruktur 28, die der Gesamtanordnung zusätzliche Stabilität und Steifigkeit verleiht.

Der in Figur 1 dargestellte Frontendträger 10 hat somit eine durchgehende Hohlstruktur. Schraffierte Flächen zeigen die Wände der Hohlstruktur an. Bei der Herstellung füllt der geschmolzene Kunststoff zunächst den Fronthohlraum. Das unter Druck stehende Wasser tritt von einer Seite in den Formhohlraum ein und drückt auf der anderen Seite Material heraus, um die Hohlstruktur entlang des Formhohlraums zu bilden. Die Verbindungsstruktur (engl.: Connecting Structure) 28 verbindet die beiden Enden, d. h. Wassereintritt 24 und Wasseraustritt 26. Der vollständige Frontendträger 10 einschließlich Verbindungsstruktur 28, Versteifungsstruktur 20 und Befestigungspunkten 22 besteht aus demselben Material wie die Wände 12, 14 der Hohlstruktur. Die Verbindungsstruktur 28 kann nachträglich hinzugefügt werden, bspw. mit einer Klemmverbindung.

Die Frontendstruktur wird üblicherweise in Form von Längsträgern an der Karosserie befestigt. Mit der Hohlstruktur der Frontendstruktur, die mittels Fluidinjektionstechnik gebildet wurde, können die aufgebrachten Lasten effizient auf die Karosserie übertragen werden.

Das Motorhaubenschloss ist an der Frontendstruktur montiert. Die Montageposition des Motorhaubenschlosses befindet sich in der Mitte des oberen horizontalen Trägers 30, wie dies deutlich in Figur 1 zu erkennen ist. Es ist bei der gezeigten Ausführungsform erforderlich, dass die Befestigung dieses Motorhaubenschlosses sowohl in vertikaler als auch in horizontaler Richtung steif und stabil ist. Beispiele für Belastungsfälle sind das Zerschlagen der Motorhaube oder der aerodynamische Druck einer teilweise geöffneten Motorhaube während der Fahrt. In solchen Fällen sollte das Motorhaubenschloss an seiner Position bleiben und darf nicht versagen. Die erforderlich Steifigkeit und Stabilität wird durch eine Frontendstruktur mit Hohlkanälen gemäß einer Ausführungsform des hierin beschriebenen Frontendträgers gewährleistet, wobei diese gleichzeitig ein leichtes Design ermöglicht.

Der Kühler ist typischerweise an der Frontendstruktur angebracht bzw. montiert. Um das Gewicht des Kühlers zu tragen und alle mechanischen Anforderungen zu erfüllen, bietet die mit Fluidinjektionstechnik hergestellte Hohlstruktur eine wunderbare Kombination aus mechanischer Festigkeit und Gewichtsreduzierung.

Aufgrund der gewichtsspezifischen Steifigkeit und Festigkeit der im FIT-Verfahren hergestellten Frontend-Strukturen ist die Montage von Scheinwerfer, Hupe und modernen Sensoren sowie ggf. weiteren Komponenten mit minimaler Durchbiegung und Ausfallgefahr gewährleistet.

Figur 2 zeigt einen Schnitt entlang der Linie II-II in Figur 1. Die Darstellung zeigt den Frontendträger 10 und verdeutlicht den Hohlraum 16 bzw. Hohlkanal, der durch einen ersten Flansch 21, einen zweiten Flansch 23, einen ersten Steg 25 und einen zweiten Steg 27 definiert ist. Der erste Flansch 21 und der zweite Flansch 23 liegen sich gegenüber und verlaufen im Wesentlichen parallel zueinander. Senkrecht zu den beiden Flanschen 21, 23 sind die beiden Stege 25, 27 gerichtet, die wiederum parallel zueinander ausgerichtet sich gegenüberliegen.

Die Flansche 21, 23 und Stege 25, 27 umschließen den bei dieser Ausführungsform im Querschnitt im Wesentlichen rechteckig geformten Hohlraum 16. Deutlich ist das I-Träger-Profil zu erkennen, das auch als Doppel-T-Träger bezeichnet werden kann.

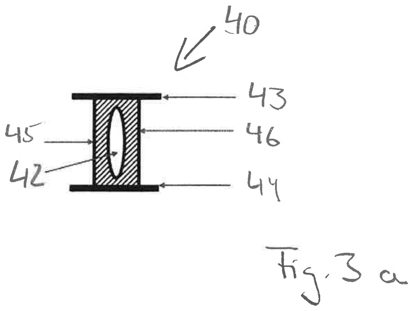

Figur 2 zeigt die ideale Geometrie, die angestrebt wird. Allerdings ist eine solch ideale Form nur mit der Projektilinjektionstechnik möglich. Da mit der Wasserinjektionstechnologie der innere Hohlraum jedoch mit Flüssigkeit gefüllt ist, kann er etwas unregelmäßig sein, bspw. elliptisch, wie dies in Figur 3a gezeigt ist.

Figur 3a zeigt einen Schnitt durch eine andere Ausführungsform des Frontendträgers 40 mit einem alternativ ausgeführten Hohlraum 42, der in diesem Fall im Querschnitt elliptisch ausgebildet ist. Die Darstellung zeigt wiederum einen ersten Flansch 43, einen zweiten Flansch 44, einen ersten Steg 45 und einen zweiten Steg 46. Die beiden Stege 44, 46 sind an ihren Innenseiten abgerundet ausgebildet und umschießen vollständig den Hohlraum 42, so dass sich der elliptische Querschnitt ergibt. Hier ist insbesondere ein Doppel-T-Profil zu erkennen, das auch als I-Profil bezeichnet werden kann.

Figur 3b zeigt einen alternativen Querschnitt eines Frontendträgers 400, wobei der Querschnitt hier asymmetrisch ausgebildet ist. Die Darstellung zeigt einen ersten Flansch 402, einen zweiten Flansch 404, einen ersten Steg 406, einen zweiten Steg 408 und einen Hohlraum 410.

Figur 3c zeigt noch einen weiteren möglichen Querschnitt eines Frontendträgers 420. Die Darstellung zeigt einen ersten Flansch 422, einen ersten Steg 426, einen zweiten Steg 428 und einen Hohlraum 430. Durch das Entfernen des zweiten Flanschs bleiben die beiden Stege 426, 428 übrig und der Hohlraum 420 kann bereitgestellt werden. Der Querschnitt ist vergleichbar mit dem Querschnitt eines T-Trägers mit zwei Stegen.

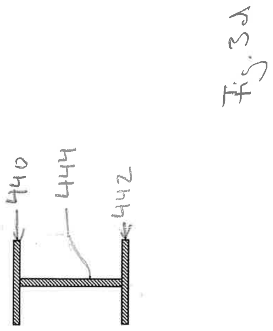

Figur 3d zeigt einen Querschnitt durch den Frontendträger in einem Bereich ohne Hohlraum. Zu erkennen ist ein Profil eines I-Trägers mit einem ersten Flansch 440, einem zweiten Flansch 442 und einem Steg 444. Der Frontendträger kann in allen Bereichen, die keinen Hohlraum aufweisen, so ausgebildet sein, oder nur in einigen Bereichen bzw. Abschnitten ohne Hohlraum. Anstelle eines I-Trägers kann in diesem Bereich auch im Querschnitt ein T-Träger, C-Träger oder auch ein Doppel-T-Träger realisiert sein.

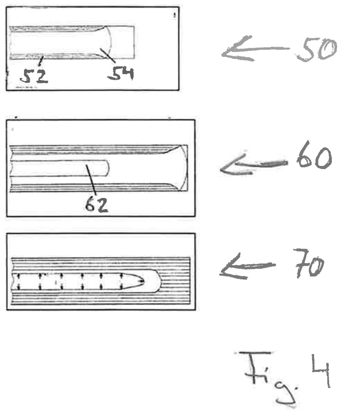

Figur 4 zeigt in drei Darstellungen unterschiedliche Phasen des Herstellungsprozesses anhand eines Bauteils. In der Darstellung oben 50 ist das Bauteil beim Einspritzen der Polymerschmelze in eine Kavität gezeigt. Bezugsziffer 52 zeigt eine eingefrorene Randschicht, Bezugsziffer 54 bezeichnet die flüssige Seele.

Darstellung 60 zeigt die Injektion des Fluids in die flüssige Seele des Polymers und somit die Phase während des Fluidinjektionsschritts. Bezugsziffer 62 bezeichnet das injizierte Fluid.

Darstellung 70 zeigt die Druckhaltephase des Fluids. Anschließend folgt noch das Entfernen des Fluids aus dem Hohlraum. Es wird dann ein fertiges Bauteil, in diesem Fall der Frontendträger, der zum Einsatz bei einem Fahrzeug eingerichtet ist, erhalten.

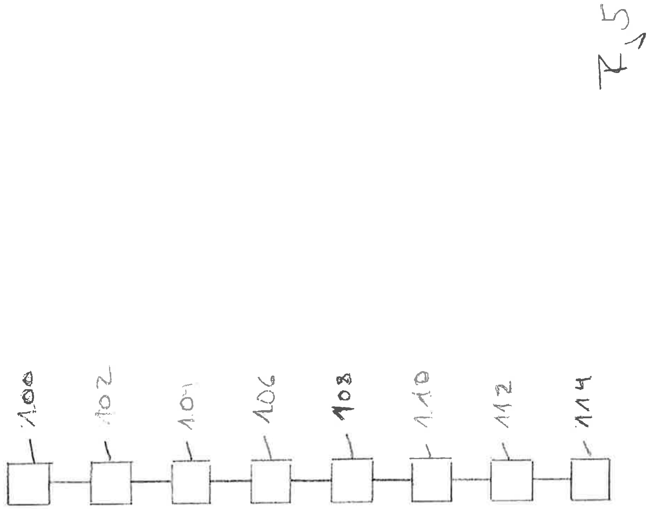

Figur 5 zeigt in einem Flussdiagramm einen möglichen Ablauf zum Herstellen eines Frontendträgers der hierin beschriebenen Art am Beispiel eines Spritzgussverfahrens.

In einem ersten Schritt 100 wird ein Werkzeug geöffnet und ggf. ein Bauteil entnommen falls ein solches vorhanden ist. Dann werden in einem Schritt 102 Endlosfasereinlagen positioniert abgelegt. In einem Schritt 104 wird dann das Werkzeug geschlossen. Es wird dann in einem Schritt 106 ein mit Kurz- oder Langfaser verstärktes Polymer injiziert und eine Kavität im Werkzeug gefüllt. In einem Schritt 108 wird ein Fluid injiziert und das Hohlprofil ausgebildet. Das Werkstück, der spätere Frontendträger, kühlt dann in einem Schritt 110 ab. Ist dies erfolgt, wird in einem Schritt 112 das Werkzeug geöffnet und in einem Schritt 114 der Frontendträger entnommen.

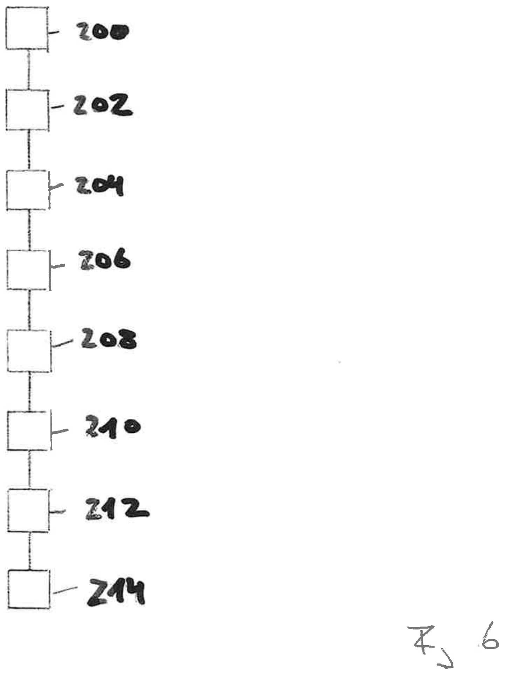

Figur 6 zeigt in einem weiteren Flussdiagramm einen weiteren möglichen Ablauf zum Herstellen eines weiteren Frontendträgers der hierin beschriebenen Art am Beispiel eines Fließpressverfahrens.

In einem ersten Schritt 200 wird ein Werkzeug geöffnet und ggf. ein Bauteil entnommen falls ein solches vorhanden ist. Dann werden in einem Schritt 202 Endlosfasereinlagen positioniert abgelegt. Es wird dann in einem Schritt 204 ein mit Kurz- oder Langfaser verstärktes Polymer abgelegt. In einem Schritt 206 wird das Werkzeug geschlossen und eine Kavität im Werkzeug gefüllt. In einem Schritt 208 wird ein Fluid injiziert und ein Hohlprofil ausgebildet. Das Werkstück, der spätere Frontendträger, kühlt dann in einem Schritt 210 ab. Ist dies erfolgt, wird in einem Schritt 212 das Werkzeug geöffnet und in einem Schritt 214 der Frontendträger entnommen.

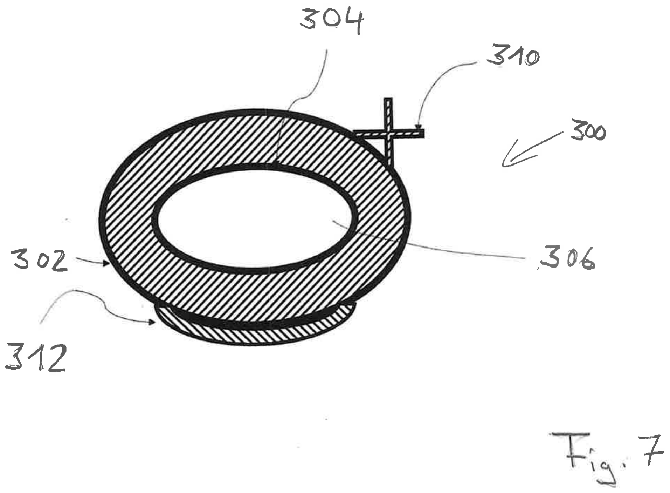

Figur 7 zeigt einen Querschnitt durch einen Frontendträger 300. Die Darstellung zeigt die beiden Wände 302, 304, in diesem Fall die Außenwand 302 und die Innenwand 304, den Hohlraum 306, die Versteifungsstruktur 310. In dieser Darstellung ist zusätzlich noch eine Endlosfaserverstärkung 312 dargestellt.

## Patentansprüche

1. Frontendträger, der mittels einer Fluidinjektionstechnik hergestellt ist und in mindestens einem Abschnitt einen Hohlraum (14, 42, 306, 410, 430) umfasst, wobei der mindestens eine Abschnitt im Querschnitt mindestens zwei Stege (25, 27, 45, 46, 406, 408, 426, 428) umfasst.

2. Frontendträger nach Anspruch 1, bei dem der mindestens eine Abschnitt im Querschnitt mindestens einen Flansch (21, 23, 43, 44, 402, 404, 422) aufweist.

3. Frontendträger nach Anspruch 1 oder 2, bei dem der mindestens eine Abschnitt den Querschnitt eines Trägers aufweist, der ausgewählt ist aus einer Gruppe, die besteht aus: I-Trägers, T-Träger, Doppel-T-Träger, C-Träger, asymmetrischer Träger.

4. Frontendträger nach einem der Ansprüche 1 bis 3, bei dem der Hohlraum (14, 42, 306, 410, 430) durchgängig vorgesehen ist.

5. Frontendträger nach einem der Ansprüche 1 bis 4, bei dem die Form des Querschnitts des Hohlraums (16, 42, 306, 410, 430) zumindest abschnittsweise kreisförmig, rechteckförmig, elliptisch, assymmetrisch oder unregelmäßig ist.

6. Frontendträger nach einem der Ansprüche 1 bis 5, der mindestens einen Wassereintritt (24) und mindestens einen Wasseraustritt (26) aufweist.

7. Frontendträger nach Anspruch 6, bei dem in einem Bereich zwischen dem mindestens einen Wassereintritt (24) und dem mindestens einen Wasseraustritt (26) eine Verbindungsstruktur (28) vorgesehen ist.

8. Frontendträger nach Anspruch 6 oder 7, bei dem der mindestens eine Wassereintritt (24) und/oder der mindestens eine Wasseraustritt (26) im Bereich eines Befestigungspunktes (22) bzw. im Bereich von Befestigungspunkten (22) des Frontendträgers (10, 40, 300) angeordnet ist bzw. sind.

9. Frontendträger nach einem der Ansprüche 1 bis 8, der mit einer Technik hergestellt ist, die ausgewählt ist aus einer Gruppe, die umfasst: Wasserinjektionstechnik, Gasinjektionstechnik, Projektilinjektionstechnik.

10. Frontendträger nach einem der Ansprüche 1 bis 9, der zumindest abschnittsweise durch eine Endlosfaserverstärkung (312) verstärkt ist.

11. Frontendträger nach einem der Ansprüche 1 bis 10, der mindestens eine Versteifungsstruktur (20, 310) aufweist.

12. Frontendträger nach einem der Ansprüche 1 bis 10, der mit Fluidinjektionstechnik hergestellt ist und bei dem Einsätze bzw. Inserts umspritzt bzw. in molded sind, bspw. umspritzte bzw. in mold Gewindeeinsätze bzw. in mold Gewinde-Inserts.

13. Frontendträger nach einem der Ansprüche 1 bis 12, der in mindestens einem Bereich ohne Hohlraum den Querschnitt eines I-Trägers, T-Trägers, Doppel-T-Trägers oder C-Trägers aufweist.

14. Frontendträger nach Anspruch 13, der in dem mindestens einem Bereich im Querschnitt zwei Flansche und einen Steg umfasst.

15. Verfahren zum Herstellen eines Frontendträgers, insbesondere eines Frontendträgers nach einem der Ansprüche 1 bis 14, bei dem eine Fluidinektionstechnik verwendet wird.
